# EUROPÄISCHE PATENTANMELDUNG

(11) **EP 3 182 480 A1**
(43) Veröffentlichungstag der Anmeldung: **21.06.2017**
(21) Anmeldenummer: 15199894.5
(22) Anmeldetag: 14.12.2015
(51) Int. Cl.: H01M 2/02, H01M 4/04, H01M 4/76, H01M 4/66, H01M 10/39

(54) **VORRICHTUNG ZUR SPEICHERUNG ELEKTRISCHER ENERGIE SOWIE VERFAHREN ZU DEREN MONTAGE UND INBETRIEBNAHME UND ZU DEREN BETRIEB**

(71) Anmelder: BASF SE, 67056 Ludwigshafen am Rhein (DE)
(72) Erfinder: BAYER, Domnik, 69121 Heidelberg (DE); ZERPA UNDA, Jesus Enrique, 69646 Heppenheim (DE); JABCZYNSKI, Wolfgang, 67482 Venningen (DE)
(74) Vertreter: Kudla, Karsten

(57) **Zusammenfassung**

Die Erfindung betrifft eine Vorrichtung zur Speicherung elektrischer Energie (1), umfassend eine elektrochemische Zelle (56) mit einem Kathodenraum (65) zur Aufnahme eines flüssigen Kathodenmaterials sowie einem Anodenraum (57) zur Aufnahme eines flüssigen Anodenmaterials, wobei der Kathodenraum (65) und der Anodenraum (57) durch einen Festelektrolyten (3) getrennt sind, wobei der Festelektrolyt (3) von einem Flächengebilde (51) mit Öffnungen, die von dem Kathodenmaterial durchströmbar sind, umschlossen ist, wobei das Flächengebilde aus einem elektrisch leitenden Material gefertigt ist, und wobei der Kathodenraum (65) mindestens ein Segment (63) umfasst, wobei jedes Segment (63) einen Mantel (53) aus einem elektrisch leitfähigen Material aufweist und der Mantel (53) fluiddicht und elektrisch leitend am Flächengebilde (51) mit Öffnungen befestigt ist.

Die Erfindung betrifft weiterhin ein Verfahren zur Montage und Inbetriebnahme der Vorrichtung und ein Verfahren zum Betrieb der Vorrichtung

## Beschreibung

Die Erfindung geht aus von einer Vorrichtung zur Speicherung elektrischer Energie, umfassend eine elektrochemische Zelle mit einem Kathodenraum zur Aufnahme eines flüssigen Kathodenmaterials sowie einem Anodenraum zur Aufnahme eines flüssigen Anodenmaterials, wobei der Kathodenraum und der Anodenraum durch einen Festelektrolyten getrennt sind. Die Erfindung betrifft weiterhin ein Verfahren zur Montage und Inbetriebnahme einer entsprechenden Vorrichtung zur Speicherung elektrischer Energie sowie einem Verfahren zum Betrieb der Vorrichtung.

Elektrochemische Zellen, die zur Speicherung elektrischer Energie eingesetzt werden, werden im Allgemeinen als Batterie oder Akkumulator bezeichnet. Andere elektrochemische Vorrichtungen sind zum Beispiel Elektrolysezellen. Diese können beispielsweise zur Herstellung von Alkalimetallen aus geeigneten Alkalimetalle enthaltenden Salzen eingesetzt werden.

Zur Speicherung von großen Mengen elektrischer Energie sind entsprechend leistungsfähige wiederaufladbare Batterien erforderlich. Hier ist ein Ansatz, Batterien auf Basis von geschmolzenem Natrium und Schwefel einzusetzen. Entsprechende Batterien, die auf Basis eines geschmolzenen Alkalimetalls als Anode und einem kathodischen Reaktionsteilnehmer, im Allgemeinen Schwefel, arbeiten, sind zum Beispiel in DE-A 26 35 900 oder DE-A 26 10 222 bekannt. Hierbei werden das geschmolzene Alkalimetall und der kathodische Reaktionsteilnehmer durch einen für Kationen durchlässigen Festelektrolyten getrennt. An der Kathode erfolgt eine Reaktion des Alkalimetalls mit dem kathodischen Reaktionsteilnehmer. Dies ist zum Beispiel bei Einsatz von Natrium als Alkalimetall und Schwefel als kathodischem Reaktionsteilnehmer die Reaktion von Natrium und Schwefel zu Natriumpolysulfid. Zum Laden der Batterie wird das Natriumpolysulfid an der Elektrode durch Aufbringen elektrischer Energie wieder in Natrium und Schwefel getrennt.

Zur Vergrößerung der Speicherfähigkeit von Batterien auf Basis von einem geschmolzenen Alkalimetall und einem kathodischen Reaktionsteilnehmer werden Batterien eingesetzt, bei denen durch zusätzliche Vorratsbehälter die Menge an den eingesetzten Reaktanden vergrößert wird. Zum Entladen wird das flüssige Natrium dem Festelektrolyten zugeführt. Das flüssige Natrium dient gleichzeitig als Anode und bildet Kationen, die durch den kationenleitenden Festelektrolyten zur Kathode transportiert werden. An der Kathode wird der an die Kathode anströmende Schwefel zu Polysulfid reduziert, also mit den Natriumionen zu Natriumpolysulfid umgesetzt. Das entsprechende Natriumpolysulfid kann in einem weiteren Behälter gesammelt werden. Alternativ ist es auch möglich, das Natriumpolysulfid mit dem Schwefel gemeinsam im Behälter um den Kathodenraum zu sammeln. Aufgrund des Dichteunterschiedes steigt der Schwefel auf und setzt sich das Natriumpolysulfid ab. Diese Dichtedifferenz kann auch dazu genutzt werden, eine Strömung entlang der Kathode zu bewirken. Ein entsprechendes Batteriedesign ist zum Beispiel in WO 2011/161072 beschrieben.

In Batterien, die mit einem Redox-System auf Basis von Natrium und Schwefel arbeiten, kann mit einem hohen Wirkungsgrad von ungefähr 90% bei der Umsetzung von Natrium und Schwefel zu Natriumpolysulfid elektrische Energie gewonnen werden. Zum Laden der Batterie wird der Vorgang durch Einspeisung von Strom umgekehrt und das Natriumpolysulfid wird zu Schwefel und Natrium gespalten. Da alle elektrochemischen Reaktanden schmelzflüssig vorliegen und der optimale Leitfähigkeitsbereich der ionenleitenden keramischen Membran erst bei höheren Temperaturen erreicht wird, liegt die Betriebstemperatur einer solchen Batterie üblicherweise bei etwa 300°C.

Da der in der elektrochemischen Zelle eingesetzte Festelektrolyt üblicherweise eine ionenleitende Keramik ist, kann ein Bruch der Keramik nicht ausgeschlossen werden. Ein solcher Bruch führt zu einem unerwünschten Kontakt von Anodenmaterial, im Allgemeinen Natrium, und Kathodenmaterial, im Allgemeinen Schwefel, und kann zu einer unkontrollierten Reaktion führen. Um die Folgen einer solchen Reaktion einzudämmen ist es bekannt, den Anteil an für die Reaktion zur Verfügung stehendem Natrium klein zu halten. Dies wird zum Beispiel durch den Einsatz eines Verdrängers erreicht, der den Raum für Anodenmaterial ausfüllt, so dass nur ein kleiner Spalt übrig bleibt, in dem sich das Anodenmaterial befindet. Ein solcher Verdränger ist zum Beispiel aus der WO2013/186213 oder aus der JP-A 10270073 bekannt.

Da elektrochemische Zellen auf Basis eines Alkalimetalls als Anodenmaterial und Schwefel als Kathodenmaterial bei einer Temperatur betrieben werden, bei der sowohl das Alkalimetall als auch Schwefel flüssig sind, werden die Zellen üblicherweise in einem isolierenden Behälter betrieben. In dem isolierenden Behälter können, wie in JP-A 2003-234132 beschrieben, Heizelemente vorgesehen sein, um zu verhindern, dass die Temperatur der Zellen unter eine für den Betrieb erforderliche Mindesttemperatur sinkt.

Aus US 8,597,813 ist es bekannt, den isolierenden Behälter einzuhausen und die Einhausung mit Lamellen auszustatten. Durch Öffnen oder Schließen der Lamellen kann die Wärmeabfuhr an der Außenseite des isolierenden Behälters geregelt werden. Gemäß JP-A 05121092 ist der isolierende Behälter doppelwandig ausgeführt und zwischen den Wandungen des Doppelmantels ist ein Vakuum ausgebildet. Durch Einstellung des Unterdrucks kann die Wärmeabfuhr eingestellt werden.

Um zu vermeiden, dass sich im Betrieb aufgrund der frei werdenden Wärme die Temperatur erhöht, ist es aus KR-A 2011-054717 bekannt, ein Phasenwechselmaterial zwischen den elektrochemischen Zellen einzubringen, das bei Betriebstemperatur einen Phasenwechsel durchläuft. Hierdurch kann im isolierten Bereich eine Temperaturerhöhung im verzögert werden. Alternativ zum Einsatz des Phasenwechselmaterials ist es aus JP-A 04051472 bekannt, den isolierenden Behälter, in dem die elektrochemischen Zellen aufgenommen sind, zur Kühlung mit Außenluft zu durchblasen und aus JP-A 2001-243993 Wärmerohre zwischen den elektrochemischen Zellen zu positionieren, deren Kopf außerhalb des isolierenden Behälters liegt.

Zur Stromleitung ist bei allen bekannten elektrochemischen Zellen, die auf Basis von Alkalimetall und Schwefel betrieben werden, der mit Schwefel gefüllte Raum mit einem elektrisch leitenden Filz, üblicherweise einem Graphitfilz, gefüllt. Der Graphitfilz dient dabei zum einen dazu, eine Phasentrennung von Alkalimetallpolysulfid und Schwefel zu verhindern, und zum anderen als Elektrode. Das bedeutet, dass der gesamte Raum, der in vollständig geladenem Zustand der Batterie mit Schwefel befüllt ist, als Elektrode wirkt. Um eine große Kapazität der elektrochemischen Zelle zu erhalten, ist es notwendig, die Mengen an Schwefel und Alkalimetall zu vergrößern. Das Alkalimetall wird dabei aus Sicherheitsgründen vorzugsweise außerhalb der elektrochemischen Zelle gelagert, der Schwefel in einem vergrößerten Raum, der den Festelektrolyten umgibt. Je größer der den Schwefel enthaltende Raum ist, umso mehr Graphitfilz wird für den Betrieb der elektrochemischen Zelle benötigt.

Aufgabe der vorliegenden Erfindung war es, eine Vorrichtung zur Speicherung elektrischer Energie bereitzustellen, die mit einer geringeren Menge an Graphitfilz oder sogar vollständig ohne Graphitfilz betrieben werden kann und bei der nicht notwendigerweise der gesamte mit Kathodenmaterial befüllte Raum als Elektrode wirkt.

Diese Aufgabe wird gelöst mit einer Vorrichtung zur Speicherung elektrischer Energie, umfassend eine elektrochemische Zelle mit einen Kathodenraum zur Aufnahme eines flüssigen Kathodenmaterials sowie einen Anodenraum zur Aufnahme eines flüssigen Anodenmaterials, wobei der Kathodenraum und der Anodenraum durch einen Festelektrolyten getrennt sind, wobei der Festelektrolyt von einem Flächengebilde mit Öffnungen, die von dem Kathodenmaterial durchströmbar sind, umschlossen ist, das Flächengebilde aus einem elektrisch leitenden Material gefertigt ist und wobei der Kathodenraum mindestens ein Segment umfasst, wobei jedes Segment einen Mantel aus einem elektrisch leitfähigen Material aufweist und der Mantel fluiddicht und elektrisch leitend am Flächengebilde mit Öffnungen befestigt ist.

Durch die Aufteilung des Kathodenraums in einzelne Segmente, die jeweils einen Mantel aus einem elektrisch leitfähigen Material aufweisen, wobei der Mantel fluiddicht und elektrisch leitend am Flächengebilde mit Öffnungen befestigt ist, kann auch der Mantel des Segments als Elektrode wirken. Dies hat den Vorteil, dass es nicht notwendig ist, einen Filz aus elektrisch leitfähigem Material in dem Kathodenraum aufzunehmen. Dies erlaubt es, auch andere Materialien als den aus dem Stand der Technik bekannten Graphit für den Filz zu nutzen. Ein weiterer Vorteil der Segmente ist, dass durch einfache Änderung der Geometrie, zum Beispiel eine größere Anzahl an Segmenten mit einem größeren Gesamtdurchmesser der elektrochemischen Zelle ein größeres Speichervolumen für das Kathodenmaterial erzielt werden kann und damit auch eine größere Kapazität der elektrochemischen Zelle.

Um die elektrochemische Zelle betreiben zu können, ist es notwendig, dass der Anodenraum und der Kathodenraum durch einen ionenleitenden Festelektrolyten getrennt sind. Geeignete Festelektrolyten sind dabei abhängig vom eingesetzten Kathodenmaterial und Anodenmaterial. Im Allgemeinen wird als Festelektrolyt eine Keramik eingesetzt. Bevorzugt als Anodenmaterial ist ein Alkalimetall, insbesondere Natrium, und als Kathodenmaterial Schwefel. Für eine solche elektrochemische Zelle ist als Material für den Festelektrolyten besonders β-Aluminiumoxid oder β"-Aluminiumoxid geeignet. Dieses wird vorzugsweise stabilisiert, beispielsweise mit Magnesiumoxid, Lithiumoxid oder Zirkoniumoxid.

Alternativ zu β-Aluminiumoxid oder β"-Aluminiumoxid können auch andere keramische Materialien als Festelektrolyt eingesetzt werden. Zum Beispiel kann die als NASCION^{®} bezeichnete Keramik, deren Zusammensetzung in EP-A 0 553 400 angegeben ist, eingesetzt werden. Alternativ zu Keramiken können auch Natriumionen-leitende Gläser oder Zeolithe und Feldspate eingesetzt werden. Insbesondere bevorzugt sind jedoch Natrium-β"-Aluminiumoxid, Natrium-β-Aluminiumoxid, Natrium-β/β"-Aluminiumoxid. Besonders bevorzugt ist es, wenn die Keramik ein β/β"-Aluminiumoxid mit einem Verhältnis von β-Aluminiumoxid zu β"-Aluminiumoxid im Bereich von 5 : 95 bis 0,5 : 99,5, insbesondere im Bereich von 3 : 97 bis 1 zu 99 und ganz besonders bevorzugt im Bereich von 2 : 98 bis 1 : 99 liegt. Die Dichte der Keramik des Festelektrolyten liegt vorzugsweise bei 95 bis 99% der theoretischen Dichte, insbesondere bei 97 bis 99% der theoretischen Dichte und ganz besonders bevorzugt bei 98 bis 99% der theoretischen Dichte, wobei sich die theoretische Dichte aus der Dichte der ionenleitenden Keramik, insbesondere des β-Aluminiumoxids beziehungsweise β"-Aluminiumoxids im idealen Kristall zuzüglich der über den Volumenanteil berechneten Dichte der Zuschlagstoffe berechnet.

Der Festelektrolyt ist bevorzugt als einseitig unten geschlossenes, oben offenes, dünnwandiges Rohr gestaltet. In diesem Fall ist es weiterhin bevorzugt, wenn das den Festelektrolyten bildende Rohr einen Durchmesser von 20 bis 80 mm und eine Länge im Bereich von 0,5 m bis 2 m aufweist. Die Wandstärke liegt vorzugsweise im Bereich von 0,5 mm bis 3 mm, insbesondere im Bereich von 1,5 mm bis 2 mm. Hierbei bildet vorzugsweise das Innere des Festelektrolyten den Anodenraum.

Die Herstellung des Festelektrolyten kann zum Beispiel durch isostatisches Pressen im sogenannten dry-bag- oder wet-bag-Verfahren erfolgen. Weiterhin ist es auch möglich, den Festelektrolyten durch Keramikextrusion oder elektrophoretische Abscheidung herzustellen. Wenn der Festelektrolyt durch endkonturnahes Pressen von Keramikgranulat in einer wet-bag- oder dry-bag-Presse geformt wird, ist keine Grünbearbeitung sondern nur ein Hartbearbeitungsschritt nach dem Sintern im oberen Bereich des offenen Endes des Festelektrolyten erforderlich. In diesem Bereich wird der eigentliche Festelektrolyt mit einem Nicht-ionenleitenden Keramikring, vorzugsweise einem α-Aluminiumoxidring (alpha-Ring) durch Anglasen verbunden.

In einer bevorzugten Ausführungsform ist der Festelektrolyt mit einem kreisförmigen Querschnitt in Form eines unten geschlossenen Rohres ausgebildet. Dieses weist eine Länge im Bereich von 0,5 bis 2 m, bevorzugt 0,5 bis 1,5 m und insbesondere 0,5 bis 1 m, einen Außendurchmesser im Bereich von 50 bis 100 mm, insbesondere im Bereich von 55 bis 70 mm und eine Wanddicke im Bereich von 1 bis 3 mm, bevorzugt im Bereich von 1,5 bis 2 mm auf.

Der Festelektrolyt ist in einer Ausführungsform von einer porösen Elektrode umschlossen, die aus einem Material gefertigt wird, das gegenüber den bei der elektrochemischen Reaktion eingesetzten Substanzen inert ist. Als Material für die Elektrode eignen sich alle chemisch inerten und elektrisch leitenden Materialien, die vom Kathodenmaterial benetzt werden können, zum Beispiel Kohlenstoff, insbesondere in Form von Graphit.

Damit die an der elektrochemischen Reaktion beteiligten Stoffe durch die Elektrode strömen können, ist diese erfindungsgemäß porös. Dies wird zum Beispiel dadurch erzielt, dass das Material der porösen Elektroden in Form eines Filzes oder Vlieses vorliegt.

Zur Verbesserung des Stofftransportes in der porösen Elektrode ist es möglich, zusätzlich zu dem chemisch inerten und elektrisch leitenden Material, das vom Kathodenmaterial benetzt werden kann, ein zweites von dem Reaktionsprodukt aus Kathodenmaterial und Anodenmaterial gut benetzbares Material vorzusehen, wobei dieses nicht zwingend elektrisch leitend sein muss. Als vom Reaktionsprodukt aus Kathodenmaterial und Anodenmaterial gut benetzbares Material eignen sich insbesondere Oxidkeramiken oder Gläser wie Aluminiumoxid (Al₂O₃), Siliziumdioxid, beispielsweise Glasfasern, Mischoxide des Aluminiums mit Silizium, Silikaten und Alumosilikaten sowie Zirkonoxid und Mischungen dieser Materialien. Wenn zusätzlich ein vom Reaktionsprodukt aus Anodenmaterial und Kathodenmaterial gut benetzbares Material enthalten ist, so liegt der Anteil an dem vom Reaktionsprodukt aus Kathodenmaterial und Anodenmaterial gut benetzbaren Material in der Elektrode vorzugsweise bei weniger als 50 Vol.-%, besonders bevorzugt weniger als 40 Vol.-% und mindestens bei 5 Vol.-%.

Eine Verbesserung des Massentransports in der Elektrode kann dadurch erzielt werden, dass der porösen Elektrode durch Vernadeln eine Vorzugsrichtung gegeben wird. Die Vorzugsrichtung verläuft dabei vorzugsweise senkrecht zu dem Festelektrolyten. Weiterhin kann eine Verbesserung des Massentransports durch kanalartige Strukturen in der Elektrode, vorzugsweise senkrecht zu dem Festelektrolyten, erzielt werden.

Um zu vermeiden, dass es im Falle eines Bruchs des Festelektrolyten zu einer unkontrollierten Reaktion kommt, ist zwischen der Elektrode und dem Festelektrolyten vorzugsweise eine chemische Barriereschicht aufgenommen. Die chemische Barriereschicht ist dabei vorzugsweise permanent mit dem Reaktionsprodukt aus Kathodenmaterial und Anodenmaterial getränkt. Hierdurch wird vermieden, dass das Anodenmaterial und das Kathodenmaterial im Fall eines Bruchs des Festelektrolyten in Kontakt miteinander kommen. Um zu verhindern, dass Kathodenmaterial in die chemische Barriereschicht eindringt, ist diese vorzugsweise aus einem Material gefertigt, das gute Benetzungseigenschaften für das Reaktionsprodukt und schlechte Benetzungseigenschaften für das Kathodenmaterial aufweist. Des Weiteren wird die Morphologie der chemischen Barriereschicht so gewählt, dass dieses für das Kathodenmaterial oder das Anodenmaterial weitgehend undurchlässig ist. Hierzu hat die chemische Barriereschicht zum Beispiel die Morphologie von dichtem Papier.

Als Material für die chemische Barriereschicht eignen sich bei Einsatz von Alkalimetall und Schwefel als Anodenmaterial und Kathodenmaterial und entsprechend Alkalimetallpolysulfid als Reaktionsprodukt aus Anodenmaterial und Kathodenmaterial übliche nichtelektronenleitende Materialien. Geeignete nichtelektronenleitende Materialien sind zum Beispiel Oxidkeramiken oder Gläser. Geeignete Oxidkeramiken und Gläser sind insbesondere Aluminiumoxid (Al₂O₃), Siliziumdioxid, beispielsweise Glasfasern, Mischoxide des Aluminiums mit Silizium, Silikaten und Alumosilikaten sowie Zirkonoxid und Mischungen dieser Materialien. Diese Materialien haben unter normalen Bedingungen, beispielsweise 25°C und 1 bar, praktisch keine elektrische Leitfähigkeit.

Das Ausgangsmaterial für die chemische Barriereschicht ist üblicherweise porös mit einer offenen Porosität im Bereich von 50 bis 99,99 %, vorzugsweise 80 bis 99 %, besonders bevorzugt 90 bis 95 %, wobei sich die offene Porosität berechnet zu 1-(Schüttdichte des Probekörpers / Dichte des Materials welches den Probekörper bildet) x 100, und mit einem mittleren Porendurchmesser von üblicherweise 1 bis 10 µm, gemessen mit optischer Mikroskopie.

Üblicherweise ist die Grundlage der chemischen Barriereschicht ein flächiges Gebilde, beispielsweise ein Gewebe, ein Filz oder eine Matte, von Fasern ausgewählt aus den vorstehend beschriebenen, bevorzugt aus Fasern aus Aluminiumoxid, beispielsweise kommerziell erhältlich unter der Bezeichnung Fiberfrax® der Firma Unifrax, und/oder Siliziumdioxid, beispielsweise Glasfasern.

Die Dicke der chemischen Barriereschicht liegt üblicherweise im Bereich von 0,25 bis 5 mm, vorzugsweise im Bereich von 0,25 bis 1 mm und insbesondere im Bereich von 0,25 bis 0,75 mm und das Flächengewicht vorzugsweise im Bereich von 20 bis 300 g/m², mehr bevorzugt im Bereich von 40 bis 200 g/m² und insbesondere im Bereich von 50 bis 100 g/m².

Um die Elektrode aufnehmen zu können wird bei Einsatz einer separaten porösen Elektrode der Kathodenraum durch das Flächengebilde mit Öffnungen in einen inneren Bereich und einen äußeren Bereich getrennt und in dem inneren Bereich zwischen dem Flächengebilde mit Öffnungen und dem Festelektrolyten sind die poröse Elektrode und - sofern vorhanden - die chemische Barriereschicht aus einem nichtelektronenleitenden Material aufgenommen. Der äußere Bereich umfasst dabei die Segmente.

Um die Funktionsfähigkeit der elektrochemischen Zelle sicherzustellen, benötigt die Elektrode einen elektrischen Kontakt zu dem Flächengebilde mit Öffnungen auf der einen Seite und einen ionenleitenden Kontakt zum Festelektrolyten auf der anderen Seite. Zudem ist es erforderlich, dass die Elektrode mit Kathodenmaterial oder mit dem Reaktionsprodukt aus Kathodenmaterial und Anodenmaterial getränkt ist.

Auf der dem Festelektrolyten gegenüberliegenden Seite schließt die Elektrode an das Flächengebilde mit Öffnungen an, wobei das Flächengebilde aus einem elektrisch leitfähigen Material gefertigt ist.

In einer alternativen Ausführungsform wird das Flächengebilde mit Öffnungen so gestaltet, dass dieses direkt an dem Festelektrolyten anliegt und als Elektrode genutzt wird. Um eine möglichst große Kontaktfläche des Flächengebildes an dem Festelektrolyten zu erhalten ist dieses vorzugsweise formbar und beispielsweise als Netzstruktur gestaltet.

Die Öffnungen in dem Flächengebilde sind erforderlich, damit beim Entladen das Kathodenmaterial zum Festelektrolyten transportiert werden kann und das Reaktionsprodukt aus Kathodenmaterial und Anodenmaterial vom Festelektrolyten weg in den Kathodenraum beziehungsweise beim Laden das Reaktionsprodukt aus Kathodenmaterial und Anodenmaterial zum Festelektrolyten und das Kathodenmaterial weg vom Festelektrolyten. Die Form der Öffnungen ist dabei frei wählbar. Vorzugsweise werden die Öffnungen in Form von Kreisen, Quadraten, Ovalen oder Polygonen gestaltet, insbesondere in Form von Kreisen oder Ovalen. Die freie Lochfläche des Flächengebildes mit Öffnungen beträgt vorzugsweise 20 bis 90%, insbesondere 40 bis 70% und ganz besonders bevorzugt 50 bis 60%.

Das Flächengebilde mit Öffnungen ist in einer ersten Ausführungsform ein Blech, in dem die Öffnungen als Löcher in einer beliebigen Form ausgebildet sind. Alternativ kann als Flächengebilde mit Öffnungen jedoch zum Beispiel auch eine Netzstruktur eingesetzt werden. Unabhängig von der Art des Flächengebildes mit Öffnungen kann dieses entweder einteilig oder mehrteilig aus mehreren Segmenten oder in mehreren Schichten, die zu einem einstückigen Flächengebilde verbunden werden, aufgebaut sein.

Die Öffnungen können dabei gleichmäßig über das Flächengebilde verteilt sein oder das Flächengebilde weist gelochte und ungelochte Bereiche auf. In diesem Fall ist es besonders bevorzugt, wenn die ungelochten Bereiche an den Positionen sind, an denen der Mantel der jeweiligen Segmente an dem Flächengebilde mit Öffnungen befestigt wird.

Die Dicke des Flächengebildes mit Öffnungen liegt vorzugsweise im Bereich von 1 bis 3 mm.

Als Material für das Flächengebilde mit Öffnungen eignen sich Stähle, insbesondere Edelstahl. Geeignete Edelstähle sind zum Beispiel solche mit den Werkstoffnummern 1.4404 oder 1.4571.

Erfindungsgemäß umfasst der Kathodenraum mindestens ein Segment, wobei jedes Segment durch einen Mantel umschlossen wird, der mit dem Flächengebilde mit Öffnungen elektrisch leitend verbunden ist. Die Anbindung des Mantels ist weiterhin fluiddicht, damit kein Kathodenmaterial aus dem Segment nach außen austreten kann. Nach unten ist der Kathodenraum mit einem Boden verschlossen. Der Boden kann dabei als ein Bauteil gebildet werden, das alle Kathodenräume nach unten abschließt. Weiterhin kann mit dem Boden in diesem Fall auch der Bereich innerhalb des Flächengebildes mit Öffnungen, in dem sich der Festelektrolyt befindet, nach unten abgeschlossen werden. Hierdurch wird gewährleistet, dass kein Kathodenmaterial und kein Reaktionsprodukt aus Kathodenmaterial und Anodenmaterial aus der elektrochemischen Zelle austreten kann. Neben der Gestaltung mit nur einem Boden ist es alternativ auch möglich, jedes Segment mit einem separaten Boden nach unten zu verschließen. In diesem Fall wird ein weiteres Bodenelement benötigt, mit dem der Bereich innerhalb des Flächengebildes mit Öffnungen, in dem sich der Festelektrolyt befindet, nach unten abgeschlossen werden kann.

Der Festelektrolyt und das Flächengebilde mit Öffnungen weisen vorzugsweise jeweils einen kreisförmigen Querschnitt auf. Alternativ können der Festelektrolyt und das Flächengebilde mit Öffnungen jedoch auch in jeder beliebigen anderen Querschnittsform, insbesondere einer Querschnittsform ohne Ecken, zum Beispiel einer ovalen oder elliptischen Querschnittsform, ausgeführt werden. Hierbei sind insbesondere solche Querschnittsformen vorzuziehen, bei denen der Festelektrolyt einen Raum umschließt, der als Anodenraum genutzt wird. Entsprechend umschließt auch das Flächengebilde mit Öffnungen den Festelektrolyten vollständig, so dass ein umlaufender Spalt zwischen Festelektrolyt und Flächengebilde mit Öffnungen entsteht. In diesem Spalt sind die dann ebenfalls ringförmige Elektrode und die chemische Barriereschicht aufgenommen.

Die Segmente des Kathodenraums können so gestaltet sein, dass jeweils eine Zwischenwand vorgesehen ist, die an dem Flächengebilde mit Öffnungen befestigt ist und die zwei Segmente unterteilt. Alternativ ist es auch möglich, jeweils einen Mantel für jedes Segment vorzusehen, wobei dieser dann so gestaltet ist, dass der Mantel an zwei Seiten mit dem Flächengebilde mit Öffnungen verbunden ist, so dass jedes Segment einen eigenen Mantel aufweist, der nicht mit einem Mantel eines benachbarten Segments verbunden ist. Ein solcher Mantel ist zum Beispiel u-förmig, v-förmig oder in Form eines Kreisabschnitts gestaltet, wobei die Enden des U, des V oder des Kreisabschnitts mit dem Flächengebilde mit Öffnungen verbunden sind. In diesem Fall ist das Flächengebilde mit Öffnungen so gestaltet, dass in dem Bereich zwischen zwei Segmenten keine Öffnungen ausgebildet sind oder alternativ die Öffnungen verschlossen sind, zum Beispiel durch Verschweißen mit Zusatzwerkstoff. Hierdurch wird ein fluiddichterAbschluss des mindestens ein Segment umfassenden Kathodenraums erzielt. Um den Mantel fluiddicht mit dem Flächengebilde mit Öffnungen zu verbinden ist es insbesondere bevorzugt, den Mantel mit dem Flächengebilde mit Öffnungen zu verschweißen. Als Material für den Mantel wird dabei vorzugsweise das gleiche Material genutzt wie für das Flächengebilde mit Öffnungen, vorzugsweise ein Stahl, insbesondere Edelstahl und ganz besonders bevorzugt ein Edelstahl mit der Werkstoffnummer 1.4404 oder 1.4571.

Das Material für den Mantel weist vorzugsweise eine Dicke im Bereich von 1 bis 3 mm auf. Um bei Einsatz eines Edelstahls eine fluiddichte Verbindung zu erhalten, wird vorzugsweise ein Schweißverfahren mit Zusatzstoff genutzt, um den Mantel mit dem Flächengebilde mit Öffnungen zu verbinden. Ein geeignetes Schweißverfahren ist zum Beispiel MIG-Schweißen. Das Verschweißen erfolgt vorzugsweise von außen, wobei unabhängig von der Position der Schweißnähte darauf zu achten ist, dass die Innenkontur des Flächengebildes mit Öffnungen durch das Schweißen nicht verändert wird. Durch die Wahl des Materials und die - bei einer Schweißverbindung - elektrisch leitende Verbindung des Mantels mit dem Flächengebilde mit Öffnungen wird eine ausreichend große Querschnittsfläche erhalten, um trotz der im Vergleich zu Kupfer oder Aluminium geringeren elektrischen Leitfähigkeit von Edelstahl den Strom ohne große Verluste aus der den Festelektrolyten umschließenden Elektrode abzuleiten.

Da in der vorstehend beschriebenen Ausführungsform sowohl das Flächengebilde mit Öffnungen als auch der Mantel der Segmente des Kathodenraums als Stromableiter dienen, ist es erforderlich, die gesamte dem Kathodenraum zugewandte Seite vor Korrosion zu schützen. Selbst die geringe Abtragsrate von Edelstahl könnte sich bei gewünschten Standzeiten der elektrochemischen Zelle von mehr als zehn Jahren negativ auf den Betrieb auswirken. Bei Einsatz von Alkalimetall und Schwefel als Anodenmaterial und Kathodenmaterial hat sich gezeigt, dass insbesondere auf Chrom basierte Korrosionsschutzschichten stabil sind. Hierzu ist es zum Beispiel möglich, eine Hartverchromung des gesamten Bauteils aus Flächengebilde mit Öffnungen und Mantel vorzunehmen. Alternativ ist es auch möglich, die dem Kathodenraum zuweisenden Seiten des Flächengebildes mit Öffnungen und des Mantels zu chromieren. Hierbei bilden sich Chromcarbid- oder Ferrochrom-Schichten, die ebenfalls beständig gegen Korrosion durch Alkalimetallpolysulfid, insbesondere Natriumpolysulfid, sind.

In einer bevorzugten Ausführungsform ist jedes Segment mit einem porösen Filz gefüllt. Durch den porösen Filz wird sichergestellt, dass das Kathodenmaterial und das Reaktionsprodukt aus Kathodenmaterial und Anodenmaterial, das im Kathodenraum gebildet wird, in gleichmäßiger Mischung verbleiben. Des Weiteren dient der Filz zum gleichmäßigen Transport von Kathodenmaterial und Reaktionsprodukt von der Elektrode weg und zur Elektrode hin. Hierzu wird der Filz aus einem Material gefertigt, der von dem Kathodenmaterial und dem Reaktionsprodukt aus Kathodenmaterial und Anodenmaterial gut benetzbar ist. Um auch bei unterschiedlichen Benetzungseigenschaften von Kathodenmaterial und Reaktionsprodukt eine gute Benetzung des Filzes zu erhalten, ist es vorteilhaft, diesen aus unterschiedlichen Materialien zu fertigen, wobei ein Teil des Materials gut vom Kathodenmaterial benetzbar ist und ein Teil gut vom Anodenmaterial. Bei Einsatz einer Mischung aus mehreren verschiedenen Materialien für den Filz werden diese vorzugsweise jeweils in gleichem Volumenanteil eingesetzt. Je nach Auslegung der elektrochemischen Zelle können jedoch auch andere Volumenverhältnisse eingestellt werden. Bei Einsatz eines Alkalimetalls als Anodenmaterial und Schwefel als Kathodenmaterial eignen sich als Material, aus dem der Filz aufgebaut ist, insbesondere thermisch stabilisierte Polymerfasern und Fasern aus Oxidkeramiken oder Glasfasern. Als Fasern aus Oxidkeramiken oder Glasfasern eignen sich insbesondere Fasern aus Aluminiumoxid (Al₂O₃), Siliziumdioxid, beispielsweise Glasfasern, Mischoxide des Aluminiums mit Silizium, Silikaten oder Alumosilikaten, Zirkonoxid oder Mischungen dieser Materialien. Geeignete thermisch stabilisierte Polymerfasern sind zum Beispiel oxidierte, thermisch stabilisierte Polyacrylnitril-(PAN)-Fasern, die beispielsweise unter der Bezeichnung PANOX® kommerziell verfügbar sind.

Eine Verbesserung des Massentransports im Filz in den Segmenten kann dadurch erzielt werden, dass dem Filz durch Vernadeln eine Vorzugsrichtung gegeben wird. Die Vorzugsrichtung verläuft dabei vorzugsweise senkrecht zu dem Flächengebilde mit Öffnungen. Weiterhin kann eine Verbesserung des Massentransports durch kanalartige Strukturen im Filz, vorzugsweise senkrecht zu dem Flächengebilde mit Öffnungen, erzielt werden.

Um eine hinreichend große Kapazität der Vorrichtung zur Speicherung elektrischer Energie zu erhalten, ist es notwendig, im geladenen Zustand eine ausreichend große Menge an Kathodenmaterial und Anodenmaterial bereitzustellen. Das Kathodenmaterial kann dabei im Kathodenraum gespeichert werden, wobei der Kathodenraum so gestaltet wird, dass das gesamte Kathodenmaterial darin aufgenommen werden kann. Des Weiteren muss noch Ausreichend Raum zur Verfügung stehen, um die Volumenzunahme während des Entladens durch Reaktion des Kathodenmaterials mit dem Anodenmaterial ausgleichen zu können.

Insbesondere bei Vorrichtungen zur Speicherung elektrischer Energie, die mit einem Alkalimetall, insbesondere Natrium, als Anodenmaterial und Schwefel als Kathodenmaterial arbeiten, ist es aus Gründen der Betriebssicherheit vorteilhaft, wenn nur eine kleine Menge an Anodenmaterial im Anodenraum der elektrochemischen Zelle enthalten ist. Für eine große Kapazität ist es daher notwendig, einen von der elektrochemischen Zelle getrennten Behälter für Anodenmaterial vorzusehen, der mit dem Anodenraum verbunden ist. Durch den getrennten Behälter für Anodenmaterial wird gewährleistet, dass zum Beispiel im Falle einer Beschädigung des Festelektrolyten nur eine geringe Menge an Anodenmaterial zur Verfügung steht, die unkontrolliert abreagieren kann. Im Betrieb der Vorrichtung zur Speicherung elektrischer Energie, insbesondere bei Abgabe von elektrischer Energie in Form von elektrischem Strom, wird kontinuierlich Anodenmaterial aus dem Behälter für Anodenmaterial in den Anodenraum nachgeführt. Der Transport erfolgt dabei vorzugsweise druckgetrieben, indem durch den Transport von Ionen des Anodenmaterials durch den Festelektrolyten und Reaktion des Anodenmaterials mit dem Kathodenmaterial aufgrund von den Anodenraum verlassendem Anodenmaterial der Druck im Anodenraum sinkt und so durch die entstehende Druckdifferenz Anodenmaterial aus dem Behälter für Anodenmaterial in den Anodenraum nachgeführt wird.

In einer besonders bevorzugten Ausführungsform ist der Behälter für Anodenmaterial unterhalb der elektrochemischen Zelle positioniert und über ein Steigrohr mit dem Anodenraum verbunden. Durch die Positionierung des Behälters für Anodenmaterial unterhalb der elektrochemischen Zelle kann verhindert werden, dass im Falle einer Störung unkontrolliert Anodenmaterial in den Anodenraum nachgeführt wird. Der Transport erfolgt rein druckgetrieben durch das Steigrohr. Hierzu ist es notwendig, dass insbesondere während des Entladens der Vorrichtung zur Speicherung elektrischer Energie das obere Ende des Steigrohres, das im Anodenraum mündet, immer in das Anodenmaterial im Anodenraum eingetaucht ist.

Um den Behälter für das Anodenmaterial und die elektrochemische Zelle einfach montieren zu können und eine exakte Positionierung des Behälters für das Anodenmaterial zu erhalten, ist es bevorzugt, wenn unterhalb der elektrochemischen Zelle ein Zentrierstab angeordnet ist und der Behälter für Anodenmaterial auf dem Zentrierstab geführt ist. Eine Potentialtrennung von Behälter für Anodenmaterial und elektrochemischer Zelle über den Zentrierstab wird erhalten, indem der Zentrierstab mit einer Isolierung umschlossen ist oder aus einem elektrisch nicht leitenden Material gefertigt ist. Um den Behälter auf dem Zentrierstab zu führen, ist dieser vorzugsweise ringförmig aufgebaut, wobei im Inneren des Behälters für Anodenmaterial ein Raum entsteht, dessen Innendurchmesser dem Außendurchmesser des Zentrierstabs mit der gegebenenfalls darauf angeordneten Isolierung entspricht. Die genaue Positionierung des Behälters für Anodenmaterial zur elektrochemischen Zelle erlaubt eine einfache Montage mehrerer Vorrichtungen zur Speicherung elektrischer Energie zu einem Modul, indem diese einfach nebeneinander positioniert werden.

Alternativ zu der Ausführungsform, bei der jeweils ein Behälter für Anodenmaterial einer elektrochemischen Zelle zugeordnet ist, ist es auch möglich, jeweils einen Behälter für mehrere elektrochemische Zellen vorzusehen oder sogar nur einen einzigen Behälter für Anodenmaterial, der mit allen elektrochemischen Zellen eines Moduls verbunden ist. Bevorzugt ist es jedoch, einen separaten Behälter für jede einzelne elektrochemische Zelle vorzusehen. Dies hat zum Beispiel den Vorteil, dass bei einem möglichen notwendigen Austausch einer einzelnen Zelle keine aufwendige Trennung der elektrochemischen Zelle vom Behälter für Anodenmaterial erforderlich ist, sondern die elektrochemische Zelle insgesamt abgeschaltet und ausgetauscht werden kann.

Als Material für den Behälter für Anodenmaterial eignet sich ebenfalls vorzugsweise ein Stahl, insbesondere Edelstahl und ganz besonders bevorzugt ein Edelstahl mit der Werkstoffnummer 1.4404 oder 1.4571.

Eine notwendige Potentialtrennung von Behälter für Anodenmaterial und elektrochemischer Zelle kann dadurch erzielt werden, dass die elektrochemische Zelle mit einer Bodenplatte aus einem elektrisch isolierenden Material versehen wird. Der Behälter für Anodenmaterial liegt dann bei einer Positionierung unterhalb der elektrochemischen Zelle mit seiner Oberseite an der Bodenplatte aus elektrisch isolierendem Material an.

Zur weiteren Minimierung der Menge an Anodenmaterial im Anodenraum ist es weiterhin bevorzugt, wenn im Anodenraum ein Verdrängerkörper aufgenommen ist. Der Verdrängerkörper ist dabei vorzugsweise so gestaltet, dass dieser nicht am Festelektrolyten anliegt und sich ein Spalt zwischen Festelektrolyt und Verdrängerkörper ausbildet, wobei der Spalt mit Anodenmaterial gefüllt ist. Durch den Einsatz des Verdrängerkörpers wird das Volumen an Anodenmaterial im Inneren des Festelektrolyten vorzugsweise auf weniger als 20%, insbesondere auf weniger als 10% des gesamten Innenvolumens des Festelektrolyten beschränkt.

Eine weitere Aufgabe des Verdrängerkörpers ist es, den Strom auf Anodenseite abzuleiten. Bei Einsatz eines Alkalimetalls als Anodenmaterial wirkt das Anodenmaterial als Elektrode. Jedoch ist die elektrische Leitfähigkeit des Alkalimetalls, insbesondere des Natriums, aufgrund des dünnen Spalts zwischen Verdrängerkörper und Festelektrolyten über die Länge des Festkörperelektrolyten nicht ausreichend hoch, um die Aufgabe der Stromableitung zu übernehmen. Hierzu ist der Verdrängerkörper vorzugsweise aus einem gegenüber dem Anodenmaterial inerten und gut elektrisch leitenden Material, insbesondere aus Aluminium oder einer Aluminium enthaltenden Legierung gefertigt.

Da der Anodenraum üblicherweise im Inneren des Festelektrolyten liegt, wird der Verdrängerkörper vorzugsweise so gestaltet, dass dessen Außenkontur der Innenkontur des Festelektrolyten entspricht, so dass bei eingesetztem Verdrängerkörper nur ein kleiner Spalt zwischen Verdrängerkörper und Festelektrolyten verbleibt. Der Verdrängerkörper weist daher üblicherweise die Form eines einseitig verschlossenen Rohres auf. Zur Herstellung eines solchen einseitig verschlossenen Rohres aus Aluminium oder einer Aluminium enthaltenden Legierung erfolgt üblicherweise durch Fließpressen oder Strangpressen. Beim Fließpressen wird mit einem Stempel Druck auf einen Aluminium-Butzen ausgeübt, der in einer Form eingelegt ist, die die Außenkontur des Verdrängerkörpers bildet. Unter Druck erweicht das Aluminium und beginnt im Spalt zwischen Außenform und Stempel zu fließen. Der Kopf des Verdrängerkörpers, der neben der Stromableitung bei unterhalb der elektrochemischen Zelle positioniertem Behälter für das Anodenmaterial vorzugsweise auch zum Anschluss des Steigrohres dient, kann ebenfalls im Fließpressverfahren hergestellt werden. Auch ist es möglich, zum Beispiel ein Einlegeteil aus Edelstahl mit Rohrstutzen so einzulegen, dass dieses im Fließpressvorgang vom Aluminium umflossen wird und so in die spätere Bauteilgeometrie integriert wird. Auf diese Weise ist es einfach möglich, einen Aluminium-Edelstahl-Übergang herzustellen, der ein einfaches Anschweißen der Steigleitung ermöglicht. Zur Abdichtung kann es dabei erforderlich sein, zusätzliche Dichtelemente während des Fließpressprozesses einzulegen.

Der Verdrängerkörper kann zum Beispiel mit dem Verdrängerkopf verschweißt werden. Durch das Fließpressverfahren ist es möglich, Verdrängerkörper günstig und mit geringen Taktzeiten zu fertigen. Weiterhin kann eine ausreichend hohe Oberflächengüte erzielt werden, so dass der Verdrängerkörper keiner weiteren Nachbearbeitung bedarf. Um im Falle eines Bruchs des Festelektrolyten eine Reaktion des Aluminiums mit dem Kathodenmaterial oder dem aus Anodenmaterial und Kathodenmaterial gebildeten Reaktionsprodukt zu verhindern ist es bevorzugt, zusätzlich eine Edelstahlfolie in den Spalt zwischen Verdrängerkörper und Festelektrolyten einzusetzen. Alternativ ist es auch möglich, den Verdrängerkörper mit einer Edelstahlbeschichtung zu versehen. Um den Verdrängerkörper mechanisch zu stabilisieren ist es möglich, den Hohlraum im Inneren mit einem gegenüber den als Anodenmaterial, Kathodenmaterial und Reaktionsprodukt aus Anodenmaterial und Kathodenmaterial inerten Material zu füllen. Ein geeignetes inertes Material ist zum Beispiel Sand.

Die Erfindung betrifft weiterhin ein Verfahren zur Montage und Inbetriebnahme der Vorrichtung zur Speicherung elektrischer Energie, welches folgende Schritte umfasst:
(a) Montage der Mäntel der Segmente des Kathodenraums an dem Flächengebilde mit Öffnungen,
(b) Tränken des porösen Filzes und der porösen Elektrode mit Alkalimetall-Polysulfid,
(c) Einbringen von mit Alkalimetall-Polysulfid getränktem Filz in jedes Segment und Einlegen der mit Alkalimetall-Polysulfid getränkten porösen Elektrode,
(d) Positionieren des Festelektrolyten innerhalb des Flächengebildes mit Öffnungen, so dass die Elektrode zwischen Flächengebilde mit Öffnungen und Festelektrolyt positioniert ist und Verbinden der Bauteile zu einer elektrochemischen Zelle,
(e) Verbinden der elektrochemischen Zelle mit dem Behälter für Anodenmaterial,
(f) Aufheizen der elektrochemischen Zelle auf Betriebstemperatur,
(g) Anlegen einer elektrischen Spannung zum Laden der Vorrichtung, wobei das Alkalimetall-Polysulfid in Alkalimetall und Schwefel gespalten wird, wobei das Alkalimetall in den Anodenraum übertritt und in den Behälter für Alkalimetall geleitet wird und der Schwefel im Kathodenraum verbleibt.

Zur Herstellung der elektrochemischen Zelle wird zunächst der Festelektrolyt mit den notwendigen Dichtelementen in den Deckel eines Zellbehälters eingeführt. Weiterhin wird der Verdrängerkörper ebenfalls mit den erforderlichen Dichtringen in den Festelektrolyten eingesetzt. Zur Verbindung von Festelektrolyt und Verdrängerkörper ist es zum Beispiel möglich, einen Flansch am oberen Ende vorzusehen, über den der Festelektrolyt und der Verdrängerkörper miteinander verschraubt werden. Alternativ können zur Verbindung von Festelektrolyt und Zellbehälter beziehungsweise Verdrängerkörper bekannte Verfahren wie thermo-compression bondig (TCB) oder Reaktivlöten (brazing) verwendet werden. Hierzu weist der Festelektrolyt vorzugsweise einen Kopf aus einer nicht-ionenleitenden Keramik, beispielsweise alpha-Aluminiumoxid, auf.

Zur Herstellung eines Zellbehälters werden die Mäntel der einzelnen Segmente des Kathodenraums an dem Flächengebilde mit Öffnungen elektrisch leitend und flluiddicht befestigt. Eine fluiddichte Befestigung wird insbesondere dadurch erzielt, dass die Mäntel der einzelnen Segmente an dem Flächengebilde mit Öffnungen angeschweißt werden. Abschließend wird der Boden an den Zellbehälter angebracht. Wenn eine Chrom-basierte Korrosionsschicht aufgebracht werden soll, so erfolgt dies besonders bevorzugt nach der Montage des Zellbehälters. Abschließend wird - bei einer Positionierung des Behälters für Anodenmaterial unterhalb der elektrochemischen Zelle - der Zentrierstab am Boden des Zellbehälters befestigt.

Als nächstes werden die Filze, die in die Segmente des Kathodenraums eingelegt werden, mit Alkalimetall-Polysulfid, insbesondere Natriumpolysulfid, getränkt und abgekühlt. Die mit Alkalimetall-Polysulfid getränkten Filze werden dann in die Segmente des Kathodenraums eingelegt, so dass jedes Segment mit einem Filz befüllt ist. Um die Filze in die Segmente einlegen zu können, ist es dabei vorteilhaft, wenn diese nach dem Tränken oder während des Tränkens und vor dem Einlegen komprimiert werden, so dass diese einen etwas kleineren Querschnitt aufweisen als die Segmente, um die Filze ohne hängen zu bleiben einschieben zu können. Hierzu werden die Filze zum Beispiel so weit komprimiert, dass der Querschnitt des Filzes nach dem Abkühlen des Alkalimetall-Polysulfids in seiner Form dem Querschnitt des Segments entspricht, in das er eingelegt werden soll, aber die Querschnittsfläche kleiner ist, so dass zwischen der Wandung des Segments und dem Filz ein Spalt von beispielsweise 0,2 bis 2 mm entsteht.

Im Inneren des Flächengebildes mit Öffnungen wird die ebenfalls mit Alkalimetall-Polysulfid, insbesondere Natrium-Polysulfid, getränkte poröse Elektrode so eingelegt, dass anschließend die Baugruppe aus Festelektrolyt und Verdrängerkörper eingeschoben werden kann. Wenn zusätzlich eine chemische Barriereschicht vorgesehen ist, so wird diese ebenfalls mit Alkalimetall-Polysulfid getränkt und auf der dem Flächengebilde mit Öffnungen abgewandten Seite im Inneren auf der Elektrode positioniert. Bevorzugt ist hier jedoch die poröse Elektrode und die chemische Barriereschicht vor dem Einsetzen miteinander zu verbinden, gemeinsam mit Alkalimetall-Polysulfid zu tränken und dann so einzulegen, dass die chemische Barriereschicht vom Flächengebilde mit Öffnungen weg weist und nach der Montage des Festelektrolyten am Festelektrolyten anliegt.

Alternativ ist es selbstverständlich auch möglich, die poröse Elektrode und gegebenenfalls die chemische Barriereschicht nach dem Tränken um den Festelektrolyten zu legen und zusammen mit dem Festelektrolyten in den vom Flächengebilde mit Öffnungen umschlossenen Raum einzuschieben.

Wie bei den in die Segmente eingelegten Filzen ist es auch hier vorteilhaft, die poröse Elektrode und gegebenenfalls die chemische Barriereschicht nach dem Tränken oder während des Tränkens mit dem Alkalimetall-Polysulfid zu komprimieren, um diese leichter einlegen zu können. Weiterhin wird so nach dem Wiederaufschmelzen durch die Rückstellung des Filzes ausreichender ionischer Kontakt zum keramischen Festelektrolyten und ausreichender elektrischer Kontakt zum Flächengebilde mit Öffnungen hergestellt.

Die so hergestellte elektrochemische Zelle wird dann mit einem Deckel verschlossen. Um zu verhindern, dass Anodenmaterial oder Kathodenmaterial austritt oder über eine Undichtigkeit vom Anodenraum in den Kathodenraum beziehungsweise vom Kathodenraum in den Anodenraum übertritt, werden entsprechende Dichtelemente eingelegt und die einzelnen Bauteile miteinander verbunden, zum Beispiel durch Verschraubungen. Der Deckel der elektrochemischen Zelle wird vorzugsweise aufgeschweißt, um einen hermetischen Verschluss zu erhalten. Um Toleranzen der Baugruppe aus Festelektrolyt und Verdrängerkörper sowie dem Zellgehäuse auszugleichen, kann das Aufschweißen des Deckels mit Zusatzwerkstoff erfolgen.

Abschließend wird der Behälter für Anodenmaterial mit den entsprechenden Leitungen mit der elektrochemischen Zelle verbunden. Bei einer Positionierung des Behälters für Anodenmaterial unterhalb der elektrochemischen Zelle wird der Zentrierstab in eine entsprechende Öffnung im Behälter für Anodenmaterial eingeführt. Der Behälter für Anodenmaterial kann dann mit der elektrochemischen Zelle verbunden werden. Wobei das Steigrohr zum Transport des Anodenmaterials vorzugsweise bereits vor der Verbindung des Behälters für Anodenmaterial mit der elektrochemischen Zelle am Behälter für Anodenmaterial angebracht ist und nach der Positionierung des Behälters nur noch mit einem entsprechenden Anschluss am Kopf der elektrochemischen Zelle verbunden werden braucht. Um eine sichere Verbindung zu erhalten, wird das Steigrohr vorzugsweise an dem Anschluss am Kopf der elektrochemischen Zelle angeschweißt.

Aus Sicherheitsgründen wird die elektrochemische Zelle vorzugsweise so betrieben, dass der Druck im Kathodenraum höher ist als der Druck im Anodenraum und im Behälter für Anodenmaterial. Um den Druck einstellen zu können, ist vorzugsweise eine weitere Leitung an den Behälter für Anodenmaterial angebracht. Über diese Leitung kann dann der Druck im Behälter für Anodenmaterial und im Anodenraum eingestellt werden. Nach der Druckeinstellung wird die Leitung verschlossen, zum Beispiel indem diese blindgeschweißt wird. Alternativ ist es selbstverständlich auch möglich, den Druck nicht über den Anodenraum und den Behälter für Anodenmaterial einzustellen sondern im Kathodenraum.

Nach der Montage der Vorrichtung zur Speicherung elektrischer Energie wird diese auf Betriebstemperatur erwärmt. Hierdurch schmilzt das Alkalimetall-Polysulfid, mit dem die Filze in den Segmenten des Kathodenraums und die poröse Elektrode getränkt sind. Anschließend wird ein elektrischer Strom an die elektrochemische Zelle angelegt, um diese zu laden. Durch das Anlegen des Stroms wird das Alkalimetall-Polysulfid in Alkalimetall und Schwefel gespalten. Die dabei entstehenden Alkalimetall-Ionen durchdringen den Festelektrolyten und werden durch Elektronenaufnahme an der Elektrode im Anodenraum neutralisiert. Das so entstehende geschmolzene Alkalimetall sammelt sich im Anodenraum. Sobald dieser vollständig gefüllt ist, strömt das entstehende Alkalimetall durch die Verbindungsleitung, insbesondere die Steigleitung in den Behälter für Anodenmaterial und wird dort gespeichert. Der entstehende Schwefel verbleibt im Kathodenraum. Nach vollständiger Ladung kann dann die Vorrichtung zur Speicherung elektrischer Energie erstmalig als Batterie zur Abgabe elektrischen Stroms genutzt werden.

Durch das Tränken des Filzes und der porösen Elektrode mit Alkalimetall-Polysulfid ist eine gegenüber dem Stand der Technik sehr viel sicherere Befüllung der elektrochemischen Zelle möglich, da kein hochreaktives Alkalimetall gehandhabt werden muss.

Um die Vorrichtung zur Speicherung elektrischer Energie nicht nur bei der Inbetriebnahme sondern auch im späteren Verlauf sicher betreiben zu können, wird die Vorrichtung so betrieben, dass unabhängig vom Betriebszustand der Druck im Kathodenraum immer höher ist als der Druck im Anodenraum. Die Druckdifferenz zwischen Anodenraum und Kathodenraum hängt hierbei zum Beispiel von dem im Anodenraum voreingestellten Druck und dem verbleibenden freien Volumen im Anodenraum und im Kathodenraum ab. Die Druckdifferenz ist abhängig vom Ladezustand der Zelle und liegt bevorzugt zwischen 0,1 und 5 bar, insbesondere zwischen 1 und 3 bar. Durch den niedrigeren Druck im Anodenraum wird sichergestellt, dass im Falle einer Schädigung des Festelektrolyten kein Anodenmaterial in den Kathodenraum eintreten und zu einer unkontrollierten Reaktion führen kann.

Ausführungsbeispiele der Erfindung sind in den Figuren dargestellt und werden in der nachfolgenden Beschreibung näher erläutert.

### Es zeigen:

Figur 1 eine Explosionszeichnung einer erfindungsgemäßen Vorrichtung zur Speicherung elektrischer Energie,
Figur 2 einen Längsschnitt einer erfindungsgemäßen Vorrichtung,
Figur 3 einen Längsschnitt eines Verdrängerkörpers,
Figuren 4 bis 6 Schnittdarstellungen eines Kathodenraums mit einem Segment,
Figuren 7 und 8 Schnittdarstellungen eines Kathodenraums mit drei Segmenten
Figuren 9 und 11 Schnittdarstellungen eines Kathodenraums mit vier Segmenten
Figur 12 eine Schnittdarstellung eines Kathodenraums mit sechs Segmenten

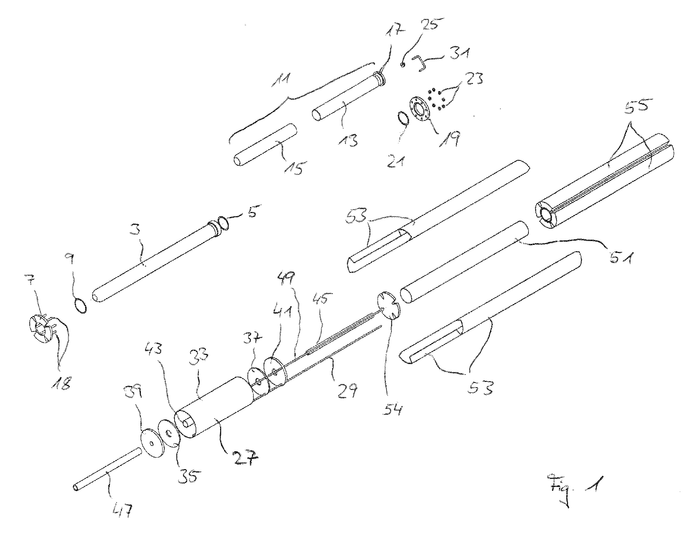

In Figur 1 ist eine Explosionszeichnung einer erfindungsgemäßen Vorrichtung zur Speicherung elektrischer Energie dargestellt. Dieser lassen sich die Bauteile entnehmen, die für die Montage einer Vorrichtung zur Speicherung elektrischer Energie benötigt werden.

Eine Vorrichtung zur Speicherung elektrischer Energie umfasst einen Festelektrolyten 3 der ionenleitend ist. Als Material für den Festelektrolyten 3 wird üblicherweise eine Keramik eingesetzt. Bei einem Alkalimetall, insbesondere Natrium, als Anodenmaterial und Schwefel als Kathodenmaterial wird vorzugsweise β-Aluminiumoxid oder β"-Aluminiumoxid eingesetzt, das gegebenenfalls mit Magnesiumoxid, Lithiumoxid oder Zirkoniumoxid stabilisiert ist. Der Festelektrolyt 3 ist in der hier dargestellten Ausführungsform als unten geschlossenes Rohr gestaltet. Im Inneren des Festelektrolyten 3 befindet sich nach der Montage der Anodenraum der elektrochemischen Zelle. Um den Anodenraum der elektrochemischen Zelle abzudichten, ist ein erster Dichtring 5 vorgesehen, der am Kopf des Festelektrolyten 3 montiert wird. Der Festelektrolyt 3 wird in einen Deckel 7 für den Zellbehälter mit einem zweiten Dichtring 9 eingeschoben. Der erste Dichtring 5 und der zweite Dichtring 9 sind dabei vorzugsweise aus Graphit. Dieses ist stabil gegenüber den in der elektrochemischen Zelle eingesetzten Materialien und der im Betrieb erforderlichen Temperaturen.

Zur Verkleinerung des Volumens des Anodenraums wird in den Festelektrolyten 3 ein Verdrängerkörper 11 eingesetzt. Die Außenkontur des Verdrängerkörpers 11 ist dabei so gestaltet, dass nach Einsetzen des Verdrängerkörpers lediglich ein Spalt zwischen der Innenwandung des Festelektrolyten 3 und der Außenkontur des Verdrängerkörpers 11 verbleibt. In der hier dargestellten Ausführungsform ist der Verdrängerkörper 11 zweiteilig gestaltet und umfasst einen oberen Teil 13 mit dem Verdrängerkopf 17 und einen unteren Teil 15. Der obere Teil 13 und der untere Teil 15 des Verdrängerkörpers werden zu einem einzelnen Bauteil zusammengefügt, zum Beispiel durch Verschweißen.

Zur Montage des Verdrängerkörpers 11 im Festelektrolyten 3 wird in der hier dargestellten Ausführungsform ein Flansch 19 eingesetzt. Der Flansch 19 wird mit einem dritten Dichtring 21, vorzugsweise ebenfalls aus Graphit, auf den Verdrängerkopf 17 aufgesetzt und mit Hilfe von Befestigungsmitteln 23, beispielsweise Muttern, mit dem Deckel 7 des Zellbehälters verschraubt. Hierzu sind vorzugsweise am Deckel 7 Gewinde 18 angebracht, die durch Öffnungen im Flansch 19 geführt und mit den als Befestigungsmittel 23 eingesetzten Muttern verschraubt werden.

Um eine Transportleitung für das Anodenmaterial am Verdrängerkopf 17 anbringen zu können, wird vorzugsweise in den Verdrängerkopf 17 ein Anschlusselement 25 eingelegt. Das Anschlusselement 25 ist vorzugsweise aus Edelstahl, um eine gute Verschweißbarkeit mit der Transportleitung für das Anodenmaterial sicherzustellen. Bei Positionierung eines Behälters 27 für Anodenmaterial unterhalb der elektrochemischen Zelle und Transport des Anodenmaterials durch ein Steigrohr 29 wird zum Beispiel ein Verbindungsrohr 31 genutzt, das einerseits am Anschlusselement 25 befestigt wird und mit der anderen Seite am Steigrohr 29.

Der Behälter für Andodenmaterial 27 umfasst eine Behälterwandung 33, einen unteren Deckel 35 und einen oberen Deckel 37 zum Verschließen sowie eine isolierende Bodenplatte 39 und eine isolierende Deckelplatte 41. Um den Behälter für Anodenmaterial fluchtend mit der elektrochemischen Zelle verbinden zu können, ist der Behälter vorzugsweise wie hier dargestellt ringförmig mit einer zentralen Aufnahme 43 für einen Zentrierstab 45 gestaltet. Zur Potentialtrennung wird der Zentrierstab 45 vorzugsweise mit einer Isolierung 47 umhüllt.

Zur Einstellung des Drucks im Anodenraum und dem Behälter 27 für Anodenmaterial ist weiterhin eine Druckleitung 49 vorgesehen. Über die Druckleitung 49 wird vorzugsweise nach der Montage der Druck im Anodenraum und dem Behälter für Anodenmaterial 27 eingestellt. Anschließend wird die Druckleitung 49 verschlossen.

Die elektrochemische Zelle umfasst weiterhin noch einen Zellbehälter, der aufgebaut ist aus einem Flächengebilde 51 mit Öffnungen. Das Flächengebilde 51 mit Öffnungen ist aus einem elektrisch leitenden und gegenüber den in der elektrochemischen Zelle eingesetzten Materialien chemisch inerten Material, vorzugsweise Edelstahl, gefertigt. Das Flächengebilde 51 mit Öffnungen ist so gestaltet, dass dieses den Festelektrolyten 3 auf der Seite des Kathodenraums vollständig überdeckt. Bei einem ringförmigen Festelektrolyten 3 wie in der hier dargestellten Ausführungsform ist auch das Flächengebilde 51 ringförmig in Form eines Rohres gestaltet. Im Inneren des rohrförmigen Flächengebildes 51 mit Öffnungen befindet sich eine poröse Elektrode die zusätzlich vorzugsweise auf der dem Flächengebilde 51 gegenüberliegenden und in montiertem Zustand dem Festelektrolyten 3 zuweisenden Seite eine chemische Barriereschicht aufweist.

Zur Bildung des Kathodenraums werden auf das Flächengebilde 51 mit Öffnungen Mäntel 53 montiert, zum Beispiel durch verschweißen. In der hier dargestellten Ausführungsform sind vier Mäntel 53 vorgesehen, die nach der Montage einen Kathodenraum mit vier Segmenten bilden. In jedes der Segmente wird abschließend ein poröser Filz 55 eingelegt, der vorzugsweise für die Montage mit Alkalimetall-Polysulfid getränkt ist. Auf ihrer Unterseite werden die Segmente des Kathodenraums mit einer Bodenplatte 54 verschlossen.

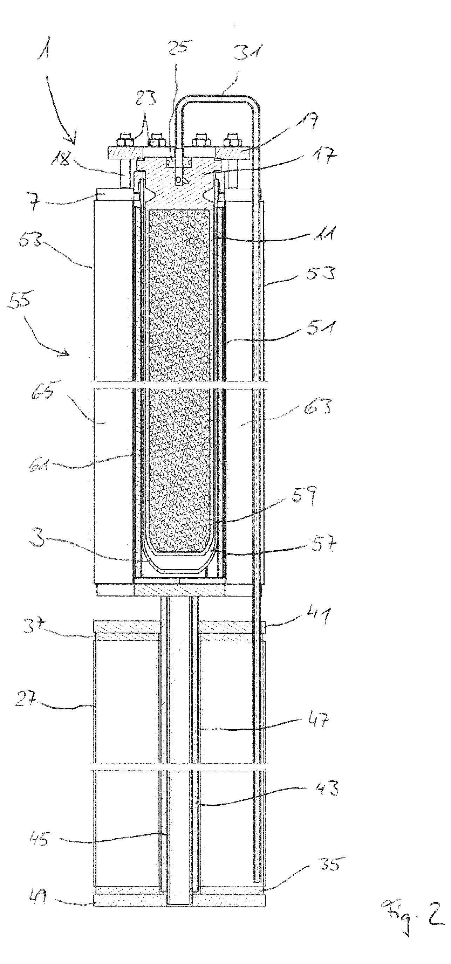

Eine zusammengebaute Vorrichtung zur Speicherung elektrischer Energie ist in einer Schnittansicht in Figur 2 dargestellt.

In einer bevorzugten Ausführungsform befindet sich der Behälter 27 für Anodenmaterial unterhalb der elektrochemischen Zelle 56 einer Vorrichtung 1 zur Speicherung elektrischer Energie. Zur genauen Positionierung ist der Behälter 27 ringförmig mit einer Aufnahme 43 für den Zentrierstab 45 gestaltet. In der fertig montierten Vorrichtung 1 umschließt der Behälter 27 für Anodenmaterial den mit der Isolierung 47 umhüllten Zentrierstab 45. Der Behälter 27 für Anodenmaterial ist dabei mit einem unteren Deckel 35 und einer isolierenden Bodenplatte 39 sowie einem oberen Deckel 37 und einer isolierenden Deckelplatte 41 verschlossen.

Über das Steigrohr 29 ist der Behälter 27 für Anodenmaterial mit der elektrochemischen Zelle 56 verbunden. Über das Steigrohr 29 strömt beim Entladen der elektrochemischen Zelle 56 Anodenmaterial, insbesondere flüssiges Natrium, aus dem Behälter 27 für Anodenmaterial in einen Anodenraum 57 der elektrochemischen Zelle 56. Hierzu ist am Verdrängerkopf 17 ein Anschluss für die Steigleitung 39, die mit dem Verbindungsrohr 31 verbunden ist, vorgesehen. Der Anschluss wird dabei über das Anschlusselement 25 realisiert. Durch den Verdrängerkopf 17 kann das Anodenmaterial dann in den Anodenraum 57 strömen. Der Anodenraum 57 befindet sich im Inneren des Festelektrolyten 3 und wird in seinem Volumen durch den in den Festelektrolyten 3 eingesetzten Verdrängerkörper 11 reduziert. Zwischen dem Verdrängerkörper 11 und dem Festelektrolyten 3 bildet sich ein Spalt 59, der mit Anodenmaterial gefüllt ist.

Der Festelektrolyt 3 ist von der gegebenenfalls mit einer chemischen Barriereschicht versehenen porösen Elektrode 61 umschlossen. Wenn eine chemische Barriereschicht vorgesehen ist, so ist diese auf der dem Festelektrolyten 3 zuweisenden Seite.

An die poröse Elektrode 61 schließt sich das Flächengebilde 51 mit Öffnungen an. An das Flächengebilde 51 mit Öffnungen sind die Mäntel 53 angebracht. Die Mäntel 53 umschließen dabei jeweils einzelne Segmente 63, wobei alle Segmente 63 zusammen den Kathodenraum 65 der elektrochemischen Zelle 56 bilden. Nach außen schließen die die Segmente 63 begrenzenden Mäntel 53 die elektrochemische Zelle 56 ab und bilden den Zellbehälter. Im Inneren jedes Segments 63 befindet sich der poröse Filz 55.

Aus produktionstechnischen Gründen wird der Verdränger vorzugsweise als Hohlkörper gestaltet. Um zu verhindern, dass die Wandungen, zum Beispiel während des Lade- und Entladebetriebs verformt werden, ist es möglich, den Hohlraum mit einem inerten Material zu befüllen, um diesen mechanisch zu stabilisieren. Hierzu kann der Hohlraum mit einem inerten Material, zum Beispiel Sand, befüllt werden.

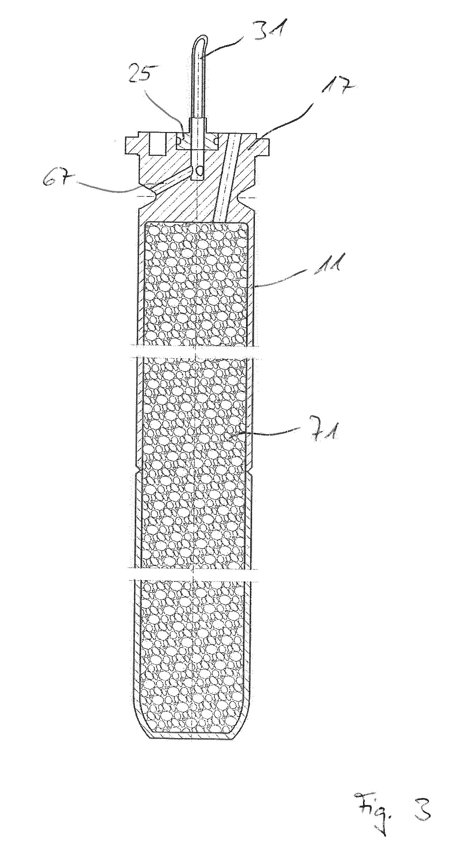

Figur 3 zeigt eine Schnittdarstellung eines Verdrängerkörpers.

Damit das Anodenmaterial aus dem Behälter für Anodenmaterial in den Anodenraum strömen kann, ist im Verdrängerkopf ein Kanal 67 ausgebildet, der einerseits über das Anschlusselement 25 mit dem Verbindungsrohr 31 verbunden ist und andererseits im Anodenraum endet. Hierzu kann, wie hier dargestellt, eine Nut 69 am Verdrängerkopf 17 ausgebildet sein, in der die Querschnittsfläche des Anodenraums im Vergleich zu dem Spalt zwischen Festelektrolyt und Verdrängerkörper 11 vergrößert wird. Auch hier ist im Inneren des Verdrängerkörpers 11 ein Hohlraum 71 ausgebildet, der mit einem inerten Material befüllt ist.

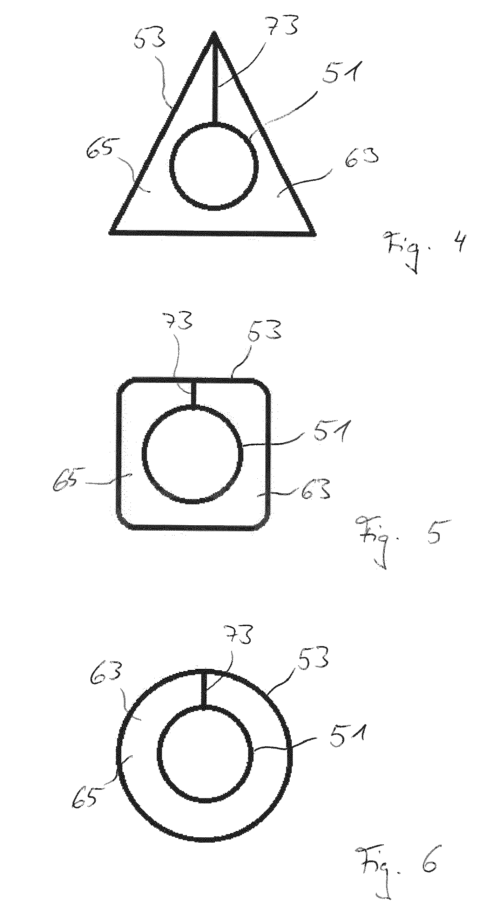

In den Figuren 4 bis 6 sind Ausführungsformen für einen Kathodenraum mit nur einem Segment dargestellt.

Der Kathodenraum 65 umfasst das Flächengebilde 51 mit Öffnungen und den Mantel 53, der den Kathodenraum 65 nach außen abschließt. Im Kathodenraum befindet sich in geladenem Zustand das Kathodenmaterial, beispielsweise Schwefel, und in entladenem Zustand das Reaktionsprodukt aus Kathodenmaterial und Anodenmaterial, beispielsweise Alkalimetall-Polysulfid, insbesondere Natriumpolysulfid. Zur Strömungsvergleichmäßigung und um zu verhindern, dass sich Kathodenmaterial und Reaktionsprodukt entmischen, ist der Kathodenraum vorzugsweise mit einem porösen Filz gefüllt.

Bei der erfindungsgemäßen Vorrichtung zur Speicherung elektrischer Energie dienen das Flächengebilde 51 und der Mantel 53 als Stromabnehmer für die hier nicht dargestellte poröse Elektrode 61. Damit sowohl Flächengebilde 51 als auch Mantel 53 als Stromabnehmer wirken können, ist es erforderlich, dass diese elektrisch leitend miteinander verbunden sind. Hierzu kann zum Beispiel bei einem Kathodenraum 65 mit nur einem Segment 63 ein Mantelelement 73 genutzt werden, mit dem der Mantel 53 am Flächengebilde 51 mit Öffnungen befestigt ist. Die Befestigung erfolgt dabei vorzugsweise durch eine Verschweißung.

Die Querschnittsform der Zelle kann beliebig gewählt werden. So ist es zum Beispiel möglich, wie in Figur 4 dargestellt, einen dreieckigen Querschnitt zu gestalten, indem der Mantel 53 dreieckig geformt wird. Entsprechend kann der Mantel 53 mit einem quadratischen Querschnitt wie in Figur 5 oder einem kreisförmigen Querschnitt wie in Figur 6 gestaltet werden.

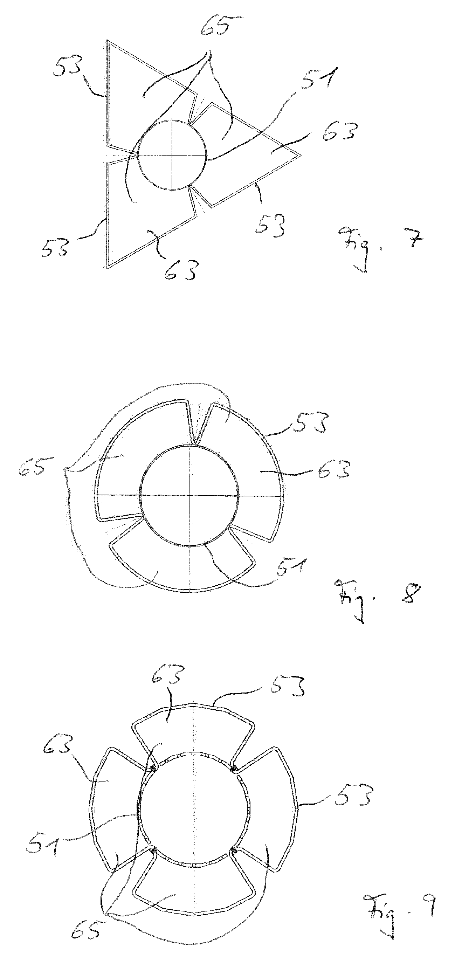

Neben den hier dargestellten Formen ist aber auch jede andere Form für den Mantel denkbar. Auch ist es möglich, anstelle eines Mantelelements 73, mit dem der Mantel 53 mit dem Flächengebilde 51 mit Öffnungen verbunden ist, den Mantel mit zwei Seitenwänden zu gestalten, die nebeneinanderliegend an dem Flächengebilde 51 mit Öffnungen befestigt werden. Auf eine entsprechende Weise sind zum Beispiel die Mäntel 53 der in den Figuren 7 bis 11 dargestellten Ausführungsformen befestigt.

In den Figuren 7 und 8 umfasst der Kathodenraum 65 jeweils drei Segmente, wobei jedes Segment einen separaten Mantel 53 aufweist, der jeweils an zwei Seiten mit dem Flächengebilde 51 verbunden ist und so das Segment 63 nach außen vollständig abschließt.

Alternativ zu den hier dargestellten Varianten, bei der sich die Mäntel 53 zweier benachbarter Segmente 63 im Bereich der Verbindung mit dem Flächengebilde 51 berühren, ist es auch möglich, hier einen größeren Abstand zu gestalten. In diesem Fall ist es notwendig, dass in dem Bereich zwischen zwei Segmenten 63 keine Öffnungen im Flächengebilde 51 sind, damit kein Kathodenmaterial zwischen den Segmenten 63 austreten kann.

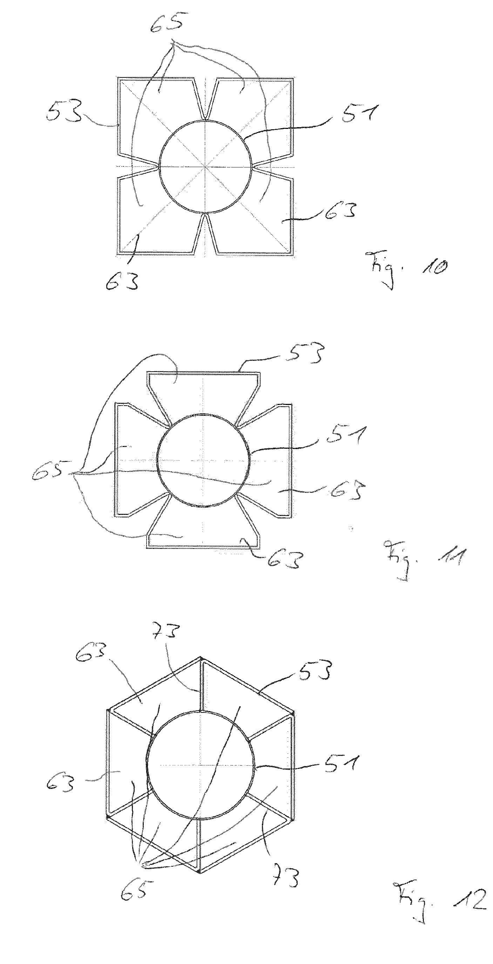

Weiterhin ist es auch möglich, anstelle eines separaten Mantels 53 für jedes Segment 63 einen gemeinsamen Mantel zu bilden und die einzelnen Segmente 63 durch Mantelelemente 73, wie in den Figuren 4 bis 6 bei einem Segment 63 und auch in Figur 12 in einer Ausführungsform mit sechs Segmenten 63 dargestellt, zu trennen.

Auch bei einer Gestaltung mit drei Segmenten 63 kann die Außenkontur des Kathodenraums 65 jede beliebige Form annehmen. So ist zum Beispiel ein dreieckiger Querschnitt, wie in Figur 7 dargestellt, oder ein kreisförmiger Querschnitt, wie in Figur 8 dargestellt, möglich. Auch jede beliebige andere Querschnittsform ist denkbar.

In den Figuren 9 bis 11 sind unterschiedliche Varianten für eine Gestaltung mit vier Segmenten 63 dargestellt. Auch hier ist es alternativ möglich, entweder einen Abstand zwischen zwei die Segmente 63 umschließenden Mänteln 53 vorzusehen oder eine Trennung durch ein Mantelelement 73 zu realisieren, wobei das Mantelelement 73 zwei Segmente 63 voneinander trennt. Als besondere Ausführungsform zeigt Figur 9 Mäntel, die aus Blechstreifen mit ungelochten Bereichen für den Mantel 53 und gelochten Bereichen für das Flächengebilde 51 mit Öffnungen aufgebaut sind. Die gezeigten vier Segmente 63 sowie das Flächengebilde 51 mit Öffnungen können so lediglich aus vier Blechstreifen gefertigt werden. Diese werden fluiddicht, zum Beispiel durch Schweißnähte an den angedeuteten Punkten verbunden. Auch eine solche Ausführungsform kann für die Herstellung jeder beliebigen weiteren Geometrie der Mäntel 53 und des Flächengebildes 51 mit Öffnungen genutzt werden.

Des Weiteren ist es auch bei einer Gestaltung mit vier Segmenten 63 möglich, den Kathodenraum 65 mit einem beliebigen Querschnitt zu gestalten. So kann der Querschnitt zum Beispiel kreisförmig, wie in Figur 9 dargestellt, oder im Wesentlichen quadratisch, wie in den Figuren 10 und 11 dargestellt, sein. Bei einem im Wesentlichen quadratischen Querschnitt können die Segmente 63 zum Beispiel wie in Figur 10 gezeigt jeweils von der Mitte einer Seite über die Ecke bis zur Mitte der daran anschließenden Seite gestaltet werden. Alternativ ist es auch möglich, wie in Figur 11 dargestellt, die Segmente 63 jeweils entlang einer Kante des Quadrates zu gestalten.

Eine Ausführungsform mit sechs Segmenten 63 ist in Figur 12 dargestellt. Hier werden die Segmente 63 jeweils durch ein Mantelelement 73 voneinander getrennt. Die Außenwandungen der einzelnen Segmente 63 verlaufen gerade, so dass sich ein sechseckiger Querschnitt ergibt. Auch hier wäre jedoch jeder beliebige andere Querschnitt möglich. Auch ist es möglich, die Segmente 63 jeweils mit einem eigenen Mantel 53 wie für die in den Figuren 7 bis 11 gezeigten Varianten zu versehen. Zur Herstellung eines Kathodenraums 65 mit mehreren Segmenten 63, bei dem die Segmente 63 jeweils durch ein Mantelelement 73 getrennt werden, ist es zum Beispiel möglich, Mantelteile einzusetzen, die jeweils das Mantelelement 73 und die Außenwandung umfassen und diese aneinander anschließend um das Flächengebilde 51 mit Öffnungen zu positionieren. Die einzelnen Mantelteile werden dann fluiddicht, zum Beispiel durch Verschweißen miteinander verbunden und bilden so den Mantel 53 der elektrochemischen Zelle.

Neben den hier dargestellten Ausführungsformen ist jede weitere Querschnittsform und jede beliebige andere Anzahl an Segmenten 63 denkbar. Bevorzugt ist hierbei jedoch, dass die Querschnitte aller Segmente 63 einer elektrochemischen Zelle gleich sind.

### Bezugszeichenliste

- 1: Vorrichtung zur Speicherung elektrischer Energie
- 3: Festelektrolyt
- 5: erster Dichtring
- 7: Deckel
- 9: zweiter Dichtring
- 11: Verdrängerkörper
- 13: oberer Teil des Verdrängerkörpers 11
- 15: unterer Teil des Verdrängerkörpers 11
- 17: Verdrängerkopf
- 18: Gewinde
- 19: Flansch
- 21: dritter Dichtring
- 23: Befestigungsmittel
- 25: Anschlusselement
- 27: Behälter für Anodenmaterial
- 29: Steigrohr
- 31: Verbindungsrohr
- 33: Behälterwandung
- 35: unterer Deckel
- 37: oberer Deckel
- 39: isolierende Bodenplatte
- 41: isolierende Deckelplatte
- 43: Aufnahme für einen Zentrierstab
- 45: Zentrierstab
- 47: Isolierung
- 49: Druckleitung
- 51: Flächengebilde mit Öffnungen
- 53: Mantel
- 54: Bodenplatte
- 55: poröser Filz
- 56: elektrochemische Zelle
- 57: Anodenraum
- 59: Spalt
- 61: poröse Elektrode
- 63: Segment
- 65: Kathodenraum
- 67: Kanal
- 69: Nut
- 71: Hohlraum
- 73: Mantelelement

## Patentansprüche

1. Vorrichtung zur Speicherung elektrischer Energie (1), umfassend eine elektrochemische Zelle (56) mit einem Kathodenraum (65) zur Aufnahme eines flüssigen Kathodenmaterials sowie einem Anodenraum (57) zur Aufnahme eines flüssigen Anodenmaterials, wobei der Kathodenraum (65) und der Anodenraum (57) durch einen Festelektrolyten (3) getrennt sind, **dadurch gekennzeichnet, dass** der Festelektrolyt (3) von einem Flächengebilde (51) mit Öffnungen, die von dem Kathodenmaterial durchströmbar sind, umschlossen ist, wobei das Flächengebilde (51) aus einem elektrisch leitenden Material gefertigt ist, und wobei der Kathodenraum (65) mindestens ein Segment (63) umfasst, wobei jedes Segment (63) einen Mantel (53) aus einem elektrisch leitfähigen Material aufweist und der Mantel (53) fluiddicht und elektrisch leitend am Flächengebilde (51) mit Öffnungen befestigt ist.

2. Vorrichtung gemäß Anspruch 1, **dadurch gekennzeichnet, dass** jedes Segment (63) mit einem porösen Filz (55) gefüllt ist, wobei der poröse Filz (55) vorzugsweise aufgebaut ist aus oxidierten thermisch stabilisierten Polymerfasern und Fasern aus Oxidkeramik oder Glasfasern.

3. Vorrichtung gemäß einem der Ansprüche 1 oder 2, **dadurch gekennzeichnet, dass** der Kathodenraum (65) durch das Flächengebilde (51) mit Öffnungen in einen inneren Bereich und einen äußeren Bereich getrennt wird und in dem inneren Bereich zwischen dem Flächengebilde (51) mit Öffnungen und dem Festelektrolyten (3) eine poröse Elektrode (61) und eine chemische Barriereschicht aus einem nichtelektronenleitenden Material aufgenommen sind und der äußere Bereich die Segmente (63) umfasst.

4. Vorrichtung gemäß Anspruch 3, **dadurch gekennzeichnet, dass** das nichtelektronenleitende Material ausgewählt ist aus Aluminiumoxid, Siliziumdioxid, Mischoxiden des Aluminiums mit Silizium, Silikaten und Alumosilikaten.

5. Vorrichtung gemäß einem der Ansprüche 1 bis 4, **dadurch gekennzeichnet, dass** ein Behälter (27) für Anodenmaterial umfasst ist, der mit dem Anodenraum (57) verbunden ist, wobei der Behälter (27) für Anodenmaterial vorzugsweise unterhalb der elektrochemischen Zelle (56) positioniert ist und über ein Steigrohr (29) mit dem Anodenraum (57) verbunden ist.

6. Vorrichtung gemäß Anspruch 4 oder 5, **dadurch gekennzeichnet, dass** unterhalb der elektrochemischen Zelle (56) ein Zentrierstab (45) angeordnet ist und der Behälter (27) für Anodenmaterial auf dem Zentrierstab (45) geführt ist.

7. Vorrichtung gemäß einem der Ansprüche 1 bis 6, **dadurch gekennzeichnet, dass** im Anodenraum (57) ein Verdrängerkörper (11) aufgenommen ist.

8. Vorrichtung gemäß einem der Ansprüche 1 bis 7, **dadurch gekennzeichnet, dass** das Anodenmaterial ein Alkalimetall und das Kathodenmaterial Schwefel ist.

9. Verfahren zur Montage und Inbetriebnahme einer Vorrichtung zur Speicherung elektrischer Energie gemäß einem der Ansprüche 1 bis 8, umfassend folgende Schritte:
(a) Montage der Mäntel (53) der Segmente (63) des Kathodenraums (65) an dem Flächengebilde (51) mit Öffnungen,
(b) Tränken des porösen Filzes (55) und der porösen Elektrode (61) mit AlkalimetallPolysulfid,
(c) Einbringen von mit Alkalimetall-Polysulfid getränktem Filz (55) in jedes Segment (63) und Einlegen der mit Alkalimetall-Polysulfid getränkten porösen Elektrode (61),
(d) Positionieren des Festelektrolyten (3) innerhalb des Flächengebildes (51) mit Öffnungen, so dass die Elektrode (61) zwischen Flächengebilde (51) mit Öffnungen und Festelektrolyt (3) positioniert ist und Verbinden der Bauteile zu einer elektrochemischen Zelle (56),
(e) Verbinden der elektrochemischen Zelle (56) mit dem Behälter (27) für Anodenmaterial,
(f) Aufheizen der elektrochemischen Zelle (56) auf Betriebstemperatur,
(g) Anlegen einer elektrischen Spannung zum Laden der Vorrichtung (1), wobei das Alkalimetall-Polysulfid in Alkalimetall und Schwefel gespalten wird, wobei das Alkalimetall in den Anodenraum (57) übertritt und in den Behälter (27) für Anodenmaterial geleitet wird und der Schwefel im Kathodenraum (65) verbleibt.

10. Verfahren gemäß Anspruch 9, **dadurch gekennzeichnet, dass** die Filze (55) und/oder die Elektrode (61) nach dem Tränken oder während des Tränkens in Schritt (b) komprimiert werden.

11. Verfahren gemäß Anspruch 9 oder 10, **dadurch gekennzeichnet, dass** das Alkalimetall Natrium ist.

12. Verfahren gemäß einem der Ansprüche 9 bis 11, **dadurch gekennzeichnet, dass** das Alkalimetall über ein Steigrohr (29) in den unterhalb der elektrochemischen Zelle (56) positionierten Behälter (27) für Alkalimetall geleitet wird.

13. Verfahren gemäß einem der Ansprüche 9 bis 12, **dadurch gekennzeichnet, dass** der Druck im Kathodenraum (65) höher ist als der Druck im Anodenraum (57) und im Behälter (27) für Anodenmaterial.

14. Verfahren zum Betrieb einer Vorrichtung gemäß einem der Ansprüche 1 bis 8, **dadurch gekennzeichnet, dass** unabhängig vom Betriebszustand der Druck im Kathodenraum (65) immer höher ist als der Druck im Anodenraum (57).

15. Verfahren gemäß Anspruch 14, **dadurch gekennzeichnet, dass** die Druckdifferenz zwischen Anodenraum (57) und Kathodenraum (65) im Bereich von 0,1 bis 5 bar liegt.
